# EUROPÄISCHE PATENTSCHRIFT

(11) **EP 1 083 994 B1**
(45) Veröffentlichungstag und Bekanntmachung des Hinweises auf die Patenterteilung: **20.08.2003**
(21) Anmeldenummer: 99936434.2
(22) Anmeldetag: 01.06.1999
(51) Int. Cl.: B05B 1/30, F16K 41/10, G05D 16/18, G05D 16/06, F16K 31/126

(54) **VORGESPANNTES STEUERBARES DURCHFLUSSBEGRENZUNGSVENTIL, INSBESONDERE SPRÜHVENTIL, UND SPRÜHBALKEN**
PRESTRESSED CONTROLLABLE FLOW-THROUGH LIMITING VALVE, ESPECIALLY A SPRAYING VALVE, AND A SPRAYING BAR
SOUPAPE DE LIMITATION DE DEBIT COMMANDEE A PRECONTRAINTE, EN PARTICULIER SOUPAPE DE VAPORISATION, ET BARRE DE VAPORISATION

(30) Priorität: 08.06.1998 DE 19825574
(43) Veröffentlichungstag der Anmeldung: 21.03.2001
(73) Patentinhaber: Evertz Hydrotechnik GmbH & Co. KG, 57076 Siegen (DE)
(72) Erfinder: MÖSER, Manfred, D-51491 Overath (DE); ROSENBAUER, Thomas, D-57580 Gebhardshain (DE); KRIEGER, Matthias, D-57555 Mudersbach (DE); EVERTZ, Ralf, D-42799 Leichlingen (DE); EVERTZ, Egon, D-42659 Solingen (DE)
(74) Vertreter: Vomberg, Friedhelm, Dipl.-Phys.
(86) Internationale Anmeldenummer: DE9901685
(87) Internationale Veröffentlichungsnummer: WO99064164

(56) Entgegenhaltungen:
- DE-A- 2 553 163
- DE-A- 3 741 406

## Beschreibung

Die Erfindung betrifft ein vorgespanntes steuerbares Durchflußbegrenzungsventil, insbesondere Sprühventil mit einem in einem Ventilgehäuse beweglichen Ventilkolben, der auf gegenüberliegenden Seiten einerseits mit dem in einem Steuerraum anliegenden Druck eines Steuermediums und andererseits in einem Druckraum mit dem Druck des Mediums dessen Durchfluß gesteuert werden soll, beaufschlagt wird und mit einem Dichtungskörper zwischen dem Steuerraum und dem Druckraum. Ferner betrifft die Erfindung einen Sprühbalken mit mehreren Sprühdüsen, denen steuerbar ein fließfähiges Medium zugeführt wird.

Ventile steuern den Start, den Stop, die Richtung sowie den Druck und die Durchflußmenge des Druckmittels. Je nach Konstruktionsprinzip wird zwischen Sitz- und Schieberventilen unterschieden, denen gemeinsam ist, daß in einem Ventilgehäuse ein Kolben hin und her verschiebbar ist. Bei nach dem Stand der Technik bekannten Ausführungen erstreckt sich der Ventilkolben auch gegenüberliegenden Stirnseiten jeweils über den gesamten Ventilgehäuseinnenraum. Der Kolben ist gegen den Ventilgehäuseinnenraum mittels Bewegungsdichtung abgedichtet.

Im Bereich der Kalt- und Warmwalzanlagen zur Herstellung von Blechen verschiedener Materialien wird eine Vielzonen-Kühlung eingesetzt, die es gestattet, in kleinen Abständen von z.B. 50 mm 2/2-Wege-Sprühventile über die Walzenbreite anzuordnen, um die Walzen und die zu walzenden Bleche gezielt in bestimmten Bereichen zu kühlen oder zu schmieren. Über die hier eingesetzten Sprühventile werden z.T. aggressive Medien mittels einer Düse versprüht, wobei zweckmäßigerweise mehrere solcher Düsen mit entsprechend vorgeschalteten Sprühventilen in einem Balken direkt vor der Walze montiert sind. Nachteiligerweise sind auch die Dichtringe diesen aggressiven Medien ausgesetzt, die zusammen mit weiteren Verunreinigungen oder über das Sprühmedium eindringenden Partikeln einem raschen Verschleiß unterliegen, so daß die zur Funktionsfähigkeit der Ventile notwendige Abdichtung nicht mehr gewährleistet ist und schließlich das Ventil funktionsunfähig wird, beispielsweise dadurch , daß auf der Steuerseite vorhandene Kanäle schnell verstopfen.

Die DE 37 41 406 A1 beschreibt ein Sprührohr, welches eine Rohrverzweigung hat, die mit einer Kühlmittel/Schmiermittel-Quelle verbunden ist. Längs dem Sprührohr sind Sprühdüsen angeordnet, die über Kanäle mit der Rohrverzweigung verbunden sind. In jedem Kanal ist ein fluidbetätigtes Ventil angeordnet, um den Strom der Flüssigkeit, die versprüht werden soll, von der Rohrverzweigung zu der Sprühdüse zu steuern, wobei das Ventil ein Schließteil enthält, welches beweglich zwischen einer Schließstellung, in welcher der Strom der zu versprühenden Flüssigkeit abgeschnitten ist, und einer Öffnungsstellung, in welcher der Strom erlaubt ist, bewegbar ist. Das Schließteil hat einen Dichtungsabschnitt in Form einer flexiblen Membran, der bzw. die von einer Tragwand getragen wird, wobei der dichtende Abschnitt und die Tragwand zusammen eine Tasche bilden, in welche das Ventilsteuerfluid eingeführt werden kann, um das Schließteil in der Schließstellung zu halten, in der das Dichtteil den Strom durch den Kanal abschneidet. Das Schließteil ist aus der Schließstellung entfernbar, wenn die Zuführung von Steuerfluid entfernt wird, wobei der Vorsprung der Stützwand sich verringert und der dichtende Abschnitt sich aus seiner Schließstellung entfernt. Der Durchfluß der auszusprühenden Flüssigkeit wird somit ausschließlich durch die Membran geregelt, die unter Druckbeaufschlagung von unten den Auslaß zu der Sprühdüse freigibt. Hierdurch bedingt sind der Steuerraum und der Druckraum durch diese Membran voneinander getrennt.

Die genannte Tragwand kann nach einer dortigen Ausführungsform aus einem Stahlbalgen, nämlich als wellenförmige Hülse gebildet sein. Diese Hülse kann ggf. durch Schweißen oder Kleben mit einer Metallscheibe verbunden werden, an welcher die genannte elastische Membran befestigt ist. Die wellenförmige Hülse kann alternativ hierzu auch durch eine feste Wand aus elastomerem Material einstückig mit der Membran geformt sein und eine hinreichende Stärke aufweisen, um dem Druck der Druckluft zu widerstehen, jedoch komprimierbar, wenn das Kühl-/Schmiermittel die Membran aus ihrer Schließposition anhebt.

Die DE 25 53 163 A1 beschreibt ein fernbetätigtes Absperrvertil für cryogene Medien innerhalb eines Isolationsmantels. Das Ventilgehäuse umfaßt eine Druckkammer, die über die Kolbenfläche eines den Ventilteller tragenden Betätigungskolbens und einen Faltenbalg gegenüber dem das cryogene Medium aufnehmenden Inneren des Ventilgehäuses abgedichtet ist. Die Druckkammer ist über eine durch den Isolationsmantel nach außen führende Druckleitung pneumatisch wirksam mit einer Steuerdruckquelle verbunden. Der Ventilteller ist bei druckloser Druckkammer durch eine Rückstellfeder derart belastet und durch den Druck des cryogenen Mediums derart beaufschlagt, daß er je nach Ausführungsform auf seinen Ventilsitz gedrückt oder von diesem abgehoben wird und das Ventil schließt oder öffnet. Durch die beschriebene Maßnahme ist der mit dem Ventilgehäuse verbundene Druckraum gegen das Innere des Ventilgehäuses und damit gegen das cryogene Medium abgedichtet.

Es ist daher Aufgabe der vorliegenden Erfindung, ein Durchflußbegrenzungsventil, insbesondere ein Sprühventil der eingangs genannten Art zu schaffen, bei dem die Abdichtung des Steuerraums und des Druckraums, durch den das zu versprühende Medium geführt wird, langfristig verbessert wird.

Diese Aufgabe wird durch das Ventil nach Anspruch 1 gelöst. Hierbei sind der Steuerraum und der Druckraum durch einen Metallbalg als Dichtungskörper voneinander getrennt. Vorzugsweise ist dieser Metallbalg ein Wellrohr aus Edelstahl, daß korrosions- und verschleißfest ist. Wird zudem der Steuerraum durch eine Ventilkolbenfläche (auf der einen Seite) begrenzt, die im Durchmesser kleiner ist als der Durchmesser des Ventilgehäuseinnenraumes, so liegt der Metallbalg im Arbeitszustand, d.h. sowohl in geöffnetem als auch geschlossenem Zustand sowie sämtlichen Zwischenstellungen von der Ventilgehäuseinnenwand beabstandet. Diese Konstruktion hat den Vorteil, daß der Metallbalg keiner Reibung ausgesetzt ist, wodurch dessen Standzeit erheblich erhöht wird. Wie bereits vorstehend geschildert, kommt es in üblichen Arbeits- und Steuerzuständen nicht zu einer Berührung des Metallbalges mit der Ventilgehäuseinnenwand. Wird z.B. aufgrund eines Bedienungsfehlers, der Steuerraum druckbeaufschlagt und gleichzeitig der umliegende Druckraum drucklos, ist nicht auszuschließen, daß sich der Metallbalg statisch an die Ventilgehäuseinnenwand anlegt. Um auch in diesen Fällen den Metallbalg-außenmantel zu schonen, ist der Ventilgehäuseinnenraum, an den dem Metallbalg gegenüberliegenden Flächen mit Teflon augekleidet. Die eingebaute Teflonbuchse hat hervorragende Gleiteigenschaften und eine weiche Materialstruktur, welche den Metallbalg, insbesondere das Wellrohr vor Beschädigungen schützt. Unter Teflon wird eine homologe Kohlenstoffverbindung (CF₂)ₓ verstanden, die chemisch sehr beständig ist.

Vorzugsweise besitzt der Ventilkolben einen Ventilteller als Teil eines Sitzventils, wobei der Ventilteller an einem Führungsring befestigt ist. Nach einer weiteren Ausgestaltung der Erfindung ist der Metallbalg an der dem gehärtetem Ventilteller abgewandten Stirnseite des Ventilkolbens einerseits und an einer dieser Stirnseite gegenüberliegenden Halterung andererseits befestigt, die wiederum fest mit dem Ventilgehäuse verbunden ist. Die Halterung wird gegenüber dem Ventilgehäuse durch ruhende Dichtungen abgedichtet.

Vorzugsweise wird als Steuermedium Druckluft und/oder als durchfließendes Medium eine Flüssigkeit, insbesondere ein Kühl-Schmiermittel eingesetzt.

Strömungsnuten im Kolben vergrößern die Führungslänge des Kolbens und verkleinern die Baulänge des Gesamtventils und sind nur mit Wellrohr einsetzbar, da ein Verdrehen des Kolbens verhindert wird.

Nach einer weiteren Ausgestaltung der Erfindung ist das Ventil als ein einer Düse vorgeschaltetes Sprühventil ausgebildet, insbesondere sind mehrere Sprühventile an bzw. in einem Sprühbalken eingesetzt.

Ein Ausführungsbeispiel der vorliegenden Erfindung ist in den Figuren dargestellt. Es zeigen
- Fig. 1: einen Querschnitt durch ein erfindungsgemäßes Sprühventil und

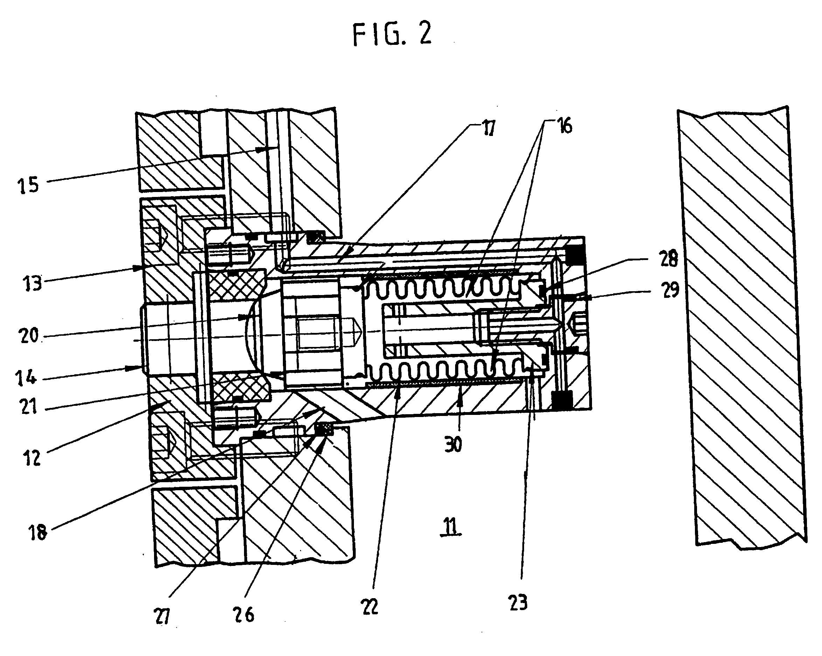

- Fig. 2: dasselbe Sprühventil nach Fig. 1 in einem in einen Balken montierten Zustand.

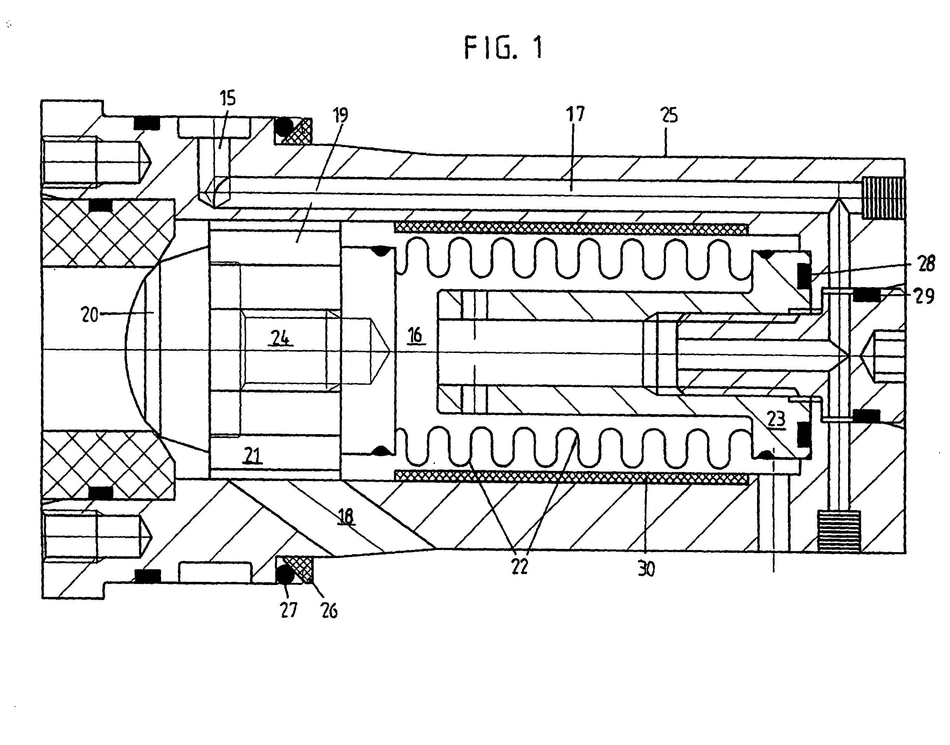

Das Sprühventil ist ein 2/2-Wege-Ventil DN 16 oder einer anderen Nenngröße, welches in einem Balken 10 ein eine dazu geschaffene Bohrung eingesetzt wird. Das Sprühventil ist im Raum 11 ständig von einem Sprühmedium unter einem eingestellten Druck umgeben. Das in Fig. 1 dargestellte Ventil ist mit dem Ventildeckel 12 mittels Schrauben z.B. an einem Ventilbalken befestigt. Das erfindungsgemäßte Ventil kann jedoch auch in anderer Weise einzeln oder mit weiteren Ventilen andersartig befestigt oder verwendet werden. Als Steuermedium dient Luft, die über die Bohrung 15 zugeführt und im Sprühventil in den Steuerraum 16 über Bohrung 17 geführt wird. Der Druck des Steuermediums Luft ist gleich oder größer als der des Sprühmediums im Raum 11, um den Ventilkolben bewegen zu können. Der Druck des Sprühmediums liegt ständig über die Bohrung 18 am Ventilkolben 19 an. Wird im Raum 16 der Druck entlastet oder der Druck im Raum 11 erhöht, so wird der Ventilkolben 19 angehoben (in der Zeichnung nach rechts bewegt) und somit eine Freigabe des Sprühmediums zur Ventildüse 14 geschaffen. Der Ventilkolben 16 besteht aus der Sitzscheibe 20, einem Führungsring 21 sowie einem Wellrohr 22 und schließlich einer Halterung 23. Die Sitzscheibe 20 ist über ein Gewinde mittels eines Klebers in dem Führungsring 21 eingeklebt. Das als Metallbalg dienende Wellrohr 22 ist sowohl am Führungsring 21 als auch an der Halterung 23 jeweils endseitig dicht verschweißt. Beim Einbau des derart vorgefertigten Kolbens wird mittels einer Schraube 24 und dem genannten Kleber der Kolben am Ventilgehäuse 25 befestigt und gesichert. Dichtungen 26 und 27 sind als Abdichtung gegenüber dem Sprühbalken 10 vorgesehen, wobei die Dichtung 26 ein verschiebbarer Stützring ist, der den Rundring 27 bei Einbau des Sprühventils verspannt. An der Ventilkörperrückseite, nämlich im Bereich der Halterung gegenüber dem Ventilgehäuse sind weitere Dichtungen 28 und 29 vorgesehen. Das Wellrohr 22 sowie die genannten Dichtungen 26 bis 29 schaffen eine hermetische Abriegelung des Steuermediums Luft gegenüber dem Sprühmedium. Bei Bewegung des Kolbens 19 hat das Wellrohr 22 keinen Kontakt zur Gehäuseinnenwand, so daß keine Reibung zwischen dem Wellrohr und der Gehäuseinnenwand auftritt. Das Edelstahlwellrohr ist zudem korrosionsfest, so daß weder aggressive Sprühmedien noch eventuell in den Raum 11 eintretende Verschmutzungen, die über die Bohrung 18 in das Ventil eingetragen werden, könnten zu Beschädigungen des Wellrohres führen.

Bei Stillstand der Walzanlage kann während der Reparatur ggf. unbeabsichtigt die Situation eintreten, daß Raum 11 drucklos gesetzt wird und der über Bohrungen 15 und 17 eingeleitete Steuerdruck erhalten bleibt, z.B. mit 10 bar. In diesem Fall ist es möglich, daß sich das Wellrohr an die Gehäuseinnenwand statisch einseitig anlegt, weshalb zum Schutz des Wellrohres 22 eine Teflonbuchse 30 eingesetzt ist, die sich über den gesamten Bereich erstreckt, in dem auch das Wellrohr liegt.

Durch das verwendete, bei Einbau vorgespannte Wellrohr entfällt die Druckfeder, welche bei nach dem Stand der Technik bekannten Ventilen den Kolben in die Schließstellung pressen, in der die Sitzscheibe 5 in einem Ventilsitz anliegt. Eine durch Federbruch bei solchen Ventilen mögliche Fehlerquelle entfällt bei der erfindungsgemäßen Konstruktion.

Bei dem dargestellten Ventil können Rückstände wie sie beim Blech- und Walzabrieb entstehen sowie andere Partikel, die in das Sprühmedium bzw. in Raum 11 und über die Bohrung 18 eindringen, keine Schädigungen verursachen. Die Ventilkolbensteuerung übernimmt die vom Vorsteuerventil kommende Druckluftbeaufschlagung bzw. Druckluftentlastung.

Selbstverständlich sind auch andere Versionen des erfindungsgemäßen Ventils ebenso möglich wie unterschiedliche Befestigungen in einem Balken, wozu als Beispiel lediglich auf ein Einzelventil ein einem separaten Gehäuse bzw. auf ein in den Balken durchgestecktes Ventil hingewiesen wird.

## Patentansprüche

1. Vorgespanntes steuerbares Durchflußbegrenzungsventil, insbesondere Sprühventil mit einem in einem Ventilgehäuse (25) bewegten Ventilkolben (19), der auf gegenüberliegenden Seiten einerseits mit dem in einem Steuerraum (16) anliegenden Druck eines Steuermediums und andererseits in einem Druckraum mit dem Druck des Mediums, dessen Durchfluß gesteuert werden soll, beaufschlagt wird und mit einem Dichtungskörper (22) zwischen dem Steuerraum (16) und dem Druckraum,
**dadurch gekennzeichnet,**
**daß** der Steuerraum (16) und der Druckraum durch einen Metallbalg als Dichtungskörper voneinander getrennt sind und daß der Ventilgehäuseinnenraum an den dem Metallbalg (22) gegenüberliegenden Flächen mit Teflon (30) ausgekleidet ist.

2. Durchflußbegrenzungsventil nach Anspruch 1, **dadurch gekennzeichnet, daß** der Metallbalg (22) ein Wellrohr aus Edelstahl ist, vorzugsweise ein vorgespanntes Wellrohr.

3. Durchflußbegrenzungsventil nach Anspruch 1 oder 2, **dadurch gekennzeichnet, daß** der Steuerraum (16) durch eine Ventilkolbenfläche begrenzt wird, die im Durchmesser kleiner ist als der Durchmesser des Ventilgehäuseinnenraums, so daß der Metallbalg (22) im Arbeitszustand von der Ventilgehäuseinnenwand beabstandet ist.

4. Durchflußbegrenzungsventil nach einem der Ansprüche 1 bis 3, **dadurch gekennzeichnet, daß** der Ventilkolben (19) einen Ventilteller (20) als Teil eines Sitzventils aufweist und daß der Ventilteller (20) an einem Führungsring (21) befestigt ist.

5. Durchflußbegrenzungsventil nach Anspruch 4, **dadurch gekennzeichnet, daß** der Metallbalg (22) an der dem Ventilteller (20) abgewandten Stirnseite des Ventilkolbens (19) einerseits und an einer dieser Stirnseite gegenüberliegenden Halterung (23) andererseits befestigt ist, die fest mit dem Ventilgehäuse (25) verbunden ist.

6. Durchflußbegrenzungsventil nach Anspruch 5, **dadurch gekennzeichnet, daß** die Halterung (23) gegenüber dem Ventilgehäuse (25) durch ruhende Dichtungen (28), (29) abgedichtet ist.

7. Durchflußbegrenzungsventil nach einem der Ansprüche 1 bis 6, **dadurch gekennzeichnet, daß** das Steuermedium Druckluft und/oder das durchfließende Medium eine Flüssigkeit, insbesondere ein Kühl-Schmiermittel ist.

8. Durchflußbegrenzungsventil nach Anspruch 7, **dadurch gekennzeichnet, daß** der Kolben (21) Strömungsnuten zur Vergrößerung der Kolben-Führungslänge und/oder zur Verdrehsicherung des Kolbens aufweist.

## Claims

1. Prestressed controllable flow-limiting valve, in particular spray valve, with a valve piston (19) which is moved in a valve housing (25) and subjected on opposite sides to the action firstly of the pressure of a control medium prevailing in a control chamber (16) and secondly of the pressure of the medium whose flow is to be controlled in a pressure chamber, and with a sealing body (22) between the control chamber (16) and the pressure chamber, **characterised in that** the control chamber (16) and the pressure chamber are separated from one another by a metal bellows serving as sealing body, and **in that** the internal chamber of the valve housing is lined with teflon (30) on the surfaces facing the metal bellows (22).

2. Flow-limiting valve according to claim 1, **characterised in that** the metal bellows (22) is a corrugated tube made of stainless steel, preferably a prestressed corrugated tube.

3. Flow-limiting valve according to claim 1 or 2, **characterised in that** the control chamber (16) is bounded by a valve piston face which is smaller in diameter than the diameter of the internal chamber of the valve housing so that the metal bellows (22) is a distance from the internal wall of the valve housing in the working state.

4. Flow-limiting valve according to one of claims 1 to 3, **characterised in that** the valve piston (19) exhibits a valve disk (20) serving as part of a seat valve, and **in that** the valve disk (20) is fastened to a guiding ring (21).

5. Flow-limiting valve according to claim 4, **characterised in that** the metal bellows (22) is fastened on one side to the end of the valve piston (19) remote from the valve disk (20) and on the other side to a mounting (23) which lies opposite this end and is connected firmly to the valve housing (25).

6. Flow-limiting valve according to claim 5, **characterised in that** the mounting (23) is sealed in relation to the valve housing (25) by resting seals (28), (29).

7. Flow-limiting valve according to one of claims 1 to 6, **characterised in that** the control medium is compressed air and/or the medium flowing through is a liquid, in particular a cooling lubricant.

8. Flow-limiting valve according to claim 7, **characterised in that** the piston (21) exhibits flow grooves to increase the length over which the piston is guided and/or to prevent the piston turning.

## Revendications

1. Soupape précontrainte de limitation de débit qui peut être commandée, en particulier soupape de pulvérisation avec un piston de soupape (19) qui est déplacé dans un boîtier de soupape (25) et qui, de côtés opposés, est soumis d'une part à la pression d'un milieu de commande, appliquée dans un espace de commande (16), et d'autre part, dans un espace sous pression, à la pression du milieu dont on veut commander le débit, et avec un corps d'étanchéité (22) entre l'espace de commande (16) et l'espace sous pression,
**caractérisée par le fait**
**que** l'espace de commande (16) et l'espace sous pression sont séparés l'un de l'autre par un soufflet de métal comme corps d'étanchéité, et que, sur les surfaces situées en vis-à-vis du soufflet de métal (22), l'intérieur du boîtier de soupape est revêtu de téflon (30).

2. Soupape de limitation de débit selon la revendication 1, **caractérisée par le fait que** le soufflet de métal (22) est un tube ondulé en acier spécial, de préférence un tube ondulé précontraint.

3. Soupape de limitation de débit selon la revendication 1 ou 2, **caractérisée par le fait que** l'espace de commande (16) est limité par une surface du piston de soupape, qui, quant au diamètre, est plus petite que le diamètre de l'intérieur du boîtier de soupape, de sorte que, en état de travail, le soufflet de métal (22) est espacé de la paroi intérieure du boîtier de soupape.

4. Soupape de limitation de débit selon l'une des revendications 1 à 3, **caractérisée par le fait que** le piston de soupape (19) présente un disque de soupape (20) en tant que partie d'une soupape à siège et que le disque de soupape (20) est fixé sur une bague de guidage (21).

5. Soupape de limitation de débit selon la revendication 4, **caractérisée par le fait que** le soufflet de métal (22) est fixé d'un côté sur le front du piston de soupape (19), qui montre dans la direction opposée au disque de soupape (20), et de l'autre côté sur un dispositif de fixation (23) qui est situé en vis-à-vis de ce front et qui est solidaire du boîtier de soupape (25).

6. Soupape de limitation de débit selon la revendication 5, **caractérisée par le fait que** le dispositif de fixation (23) est rendu étanche par rapport au boîtier de soupape (25) par l'intermédiaire de joints immobiles (28), (29).

7. Soupape de limitation de débit selon l'une des revendications 1 à 6, **caractérisée par le fait que** le milieu de commande est de l'air comprimé et/ou que le milieu qui coule à travers est un liquide, en particulier un réfrigérant lubrifiant.

8. Soupape de limitation de débit selon la revendication 7, **caractérisée par le fait que** le piston (19) présente des rainures d'écoulement pour agrandir la longueur de guidage du piston et/ou pour assurer le piston contre une rotation.
